# FASCICULE DE BREVET EUROPEEN

(11) **EP 1 621 828 B1**
(45) Date de publication et mention de la délivrance du brevet: **05.03.2008**
(21) Numéro de dépôt: 05300621.9
(22) Date de dépôt: 26.07.2005
(51) Int. Cl.: F25B 35/04

(54) **Réacteur thermochimique pour appareil de réfrigération et/ou de chauffage**
Thermochemischer Reaktor für Kühl- und/oder Heizgerät
Thermochemical reactor for a refrigerating and/or a heating apparatus

(30) Priorité: 30.07.2004 FR 0451726
(43) Date de publication de la demande: 01.02.2006
(73) Titulaire: Coldway, 66380 Pia (FR)
(72) Inventeur: Rigaud, Laurent, 66280, Saleilles (FR); Kindbeiter, Francis, 66200 Corneilla del Vercol (FR)
(74) Mandataire: Rhein, Alain

(56) Documents cités:
- EP-A- 0 692 086
- FR-A- 2 723 438

## Description

La présente invention concerne un réacteur thermochimique pour appareil de réfrigération et/ou de chauffage comprenant au moins un bloc de réactif apte à absorber par combinaison chimique un flux gazeux en provenance d'un réservoir et à désorber ce flux gazeux par réaction chimique inverse, sous l'effet d'une élévation de température, afin qu'il réintègre ledit réservoir, ledit bloc de réactif étant disposé dans un contenant, relié audit réservoir au travers d'une tubulure, et présentant des parois, dont certaines au moins comprennent des moyens diffuseurs autorisant la répartition du flux gazeux dans un sens ou dans l'autre entre le bloc de réactif et le réservoir, ledit bloc de réactif étant du type susceptible de s'expanser lors de l'absorption du flux gazeux et de se rétracter lors de la désorption du flux gazeux et étant relié à des moyens de chauffage.

L'invention concerne également un appareil de réfrigération et/ou de chauffage comprenant un tel réacteur thermochimique ainsi qu'un dispositif isotherme lui-même équipé dudit appareil de réfrigération et/ou de chauffage.

La présente invention concerne plus particulièrement le domaine de la production de froid et/ou de chaleur à partir de systèmes thermochimiques.

De manière connue, de tels systèmes sont fondés sur les échanges de chaleur résultant de la réaction chimique entre un gaz, tel que l'ammoniac, et des sels réactifs, tels que des chlorures de calcium, contenus respectivement dans deux réservoirs séparés par une vanne. A l'ouverture de cette dernière, une réaction chimique a lieu, au cours de laquelle le gaz se vaporise pour rejoindre les sels. Cette évaporation consomme de la chaleur, et génère par conséquent une production de froid au niveau du réservoir contenant le gaz. Par ailleurs, la réaction chimique entre le gaz et les sels est exothermique et provoque un dégagement de chaleur au niveau du réservoir de sels.

Après évaporation totale du gaz, ou lorsque les sels sont saturés, la réaction chimique s'arrête ainsi que la production de froid et de chaleur. Il est alors possible de régénérer le système, simplement en chauffant les sels réactifs, ce qui provoque la séparation des sels et du gaz qui rejoint alors son réservoir d'origine où il se condense à nouveau. Après régénération des sels réactifs, un nouveau cycle de réfrigération et/ou de chauffage peut être entrepris.

La mise en oeuvre progressive de ces systèmes thermochimiques dans un environnement industriel a nécessité conjointement le développement d'appareils adaptés, présentant des moyens aptes à optimiser, parfaire et contrôler le déroulement des réactions thermochimiques, et conçus à l'aide de matériaux fiables, capables de résister à d'importantes contraintes, notamment de pression et de température.

Dans ce contexte, de nombreux travaux ont été orientés vers la mise au point du réacteur, c'est-à-dire l'ensemble constitué par les sels réactifs, l'enveloppe dans laquelle ils sont contenus et les différents moyens dont cette dernière est équipée, en ayant pour objectif de proposer une solution dans laquelle le réactif se trouve non seulement capable d'absorber et de désorber une quantité maximale de gaz sans être entraîné par ce gaz, mais également apte à subir des variations de volume dans ladite enveloppe, sans la détériorer ni perdre ses qualités réactives, voire éclater.

On connaît actuellement plusieurs documents consacrés à la description des innovations réalisées dans ce domaine.

Ainsi, le document FR 2 455 713, par exemple, fait référence à un réacteur thermochimique pouvant être constitué de plusieurs corps réactifs rendus autoportants par un liant et contenus de façon serrée dans une enveloppe flexible présentant plusieurs éléments d'enveloppe. Des passages établis entre des éléments d'enveloppe adjacents définissent des canaux permettant la circulation du flux gazeux entre les différents corps réactifs. Le réacteur comprend également des structures de répartition communiquant avec les canaux de circulation et conçus de manière à s'adapter aux variations dimensionnelles d'un élément d'enveloppe. Ces structures de répartition peuvent comporter des éléments télescopiques qui peuvent être poussés les uns dans les autres, pour conduire à des variations de la longueur desdites structures de répartition.

Un tel réacteur thermochimique présente l'inconvénient d'une structure complexe se caractérisant par une grande fragilité.

Le document US 2 649 700 décrit un réacteur thermochimique comprenant plusieurs blocs élémentaires de réactif, de forme annulaire, confinés entre une paroi interne et une paroi périphérique. Des écrans poreux séparant les blocs élémentaires les uns des autres distribuent le flux gazeux entre les surfaces inférieure et supérieure de ces derniers et un conduit d'arrivée et de départ. Les blocs élémentaires sont réalisés en métal fritté et sont donc dimensionnellement stables, notamment à l'égard des contraintes de pression et de température précitées.

Il s'est avéré à l'usage que ce mode de réalisation présentait de nombreux inconvénients. En effet, la nature métallique des blocs limite sérieusement la quantité de gaz pouvant être absorbée et se caractérise en outre par une mauvaise rétention des particules absorbantes. Ceci oblige à faire passer le flux de gaz à travers des écrans servant de filtres lesquels compliquent et alourdissent la structure de l'ensemble.

On connaît également du document EP 0 206 875 un bloc réactif constitué d'un mélange de chlorure et d'un dérivé expansé de carbone, capable d'absorber de grandes quantités de gaz par unité de volume, et répondant au problème du transfert de masse. Ce bloc réactif solide présente cependant une tenue mécanique réduite qui a tendance à se déformer rapidement sous l'action des gradients de pression et des variations de volume subies, de sorte que sa capacité de rétention de gaz tend progressivement à diminuer au cours des cycles de réfrigération-régénération. Finalement, les surfaces du réactif prévues pour les échanges de masse peuvent être tellement déformées qu'elles deviennent totalement inefficaces.

Dans la solution proposée par le document US 2 384 460, le matériel réactif est confiné entre des parois de confinement, dans un volume limité, et est traversé par des conduits de gaz perforés remplis de laine de verre destinée à retenir ledit matériel réactif. Du fait du confinement étroit, le matériel réactif conserve le même volume et la même forme, non seulement durant la phase de saturation, mais également durant les cycles successifs d'absorption-désorption.

Un dispositif de réacteur thermochimique tout à fait similaire est également proposé dans le document EP 0 692 086, qui décrit notamment un réacteur thermochimique comprenant un bloc de réactif solide confiné dans un contenant, entre des parois de confinement dont certaines sont perméables aux échanges de masse. La caractéristique de ce réacteur est définie par le fait que le bloc réactif employé est susceptible de subir des variations de volume en fonction de la quantité de gaz absorbée, tandis que les parois de confinement sont capables d'assurer la stabilité de forme du bloc à l'encontre de la tendance auxdites variations de volume. Ainsi, il est proposé dans ce document d'enfermer un bloc de réactif solide dans un contenant aux dimensions strictement adaptées, de sorte que ce bloc de réactif conserve ses dimensions au cours des différents cycles d'absorption-désorption, garde sa tenue mécanique initiale, et évite son gonflement, voire sa détérioration par éclatement.

Il a pu être constaté que le fait de confiner le matériau réactif à l'intérieur d'un espace limité, tel que décrit en particulier dans les deux derniers documents cités, bien que rendu nécessaire pour éviter la détérioration du système, en particulier pour éviter l'éclatement du bloc réactif, représente une entrave au déroulement optimal des réactions thermochimiques attendues. En effet, le fait d'empêcher le gonflement du réactif réduit notablement la quantité maximale de gaz pouvant être successivement absorbée et désorbée, ce qui se répercute notamment sur la durée d'autonomie du système.

Un autre dispositif similaire connu est décrit dans le document FR 2 723 438 et tente de pallier le décollement du réactif solide par rapport aux parois de l'enceinte, ce décollement se traduisant par une perte de la puissance du réacteur au travers d'une baisse du coefficient de transfert thermique. Pour ce faire, un fluide est introduit entre le réactif et les parois de l'enceinte, ledit fluide réalisant la liaison thermique entre le réactif et l'enceinte. De plus, un dispositif de confinement du fluide est ajouté à l'intérieur de l'enceinte pour limiter le déplacement dudit fluide et l'empêcher de s'accumuler sur le dessus du réactif.

Ce dispositif présente néanmoins l'inconvénient d'être complexe de réalisation, faisant intervenir des moyens supplémentaires de mise en oeuvre d'un fluide et de confinement de ce dernier.

L'objet de la présente invention est donc de proposer un nouveau réacteur thermochimique dans lequel le gonflement du matériau réactif n'est pas empêché, mais néanmoins contrôlé, de sorte que ses capacités d'absorption-désorption soient pleinement mises à contribution sans pour autant craindre sa détérioration par éclatement.

A cet effet, l'invention propose un réacteur thermochimique pour appareil de réfrigération et/ou de chauffage comprenant au moins un bloc de réactif apte à absorber par combinaison chimique un flux gazeux en provenance d'un réservoir et à désorber ce flux gazeux par réaction chimique inverse, sous l'effet d'une élévation de température, afin qu'il réintègre ledit réservoir, ledit bloc de réactif étant disposé dans un contenant relié audit réservoir au travers d'une tubulure et présentant des parois, dont certaines au moins comprennent des moyens diffuseurs autorisant la répartition du flux gazeux dans un sens ou dans l'autre entre le bloc de réactif et le réservoir, ledit bloc de réactif étant du type susceptible de s'expanser lors de l'absorption du flux gazeux et de se rétracter lors de la désorption du flux gazeux et étant relié à des moyens de chauffage, caractérisé en ce que certaines au moins desdites parois consistent en des parois mobiles, aptes à accompagner le mouvement longitudinal effectué par le bloc de réactif lors de son expansion ou de sa rétractation à l'intérieur dudit contenant, de sorte à autoriser les phénomènes successifs de déformation par expansion et de retour à la forme initiale par rétractation dudit bloc de réactif,

ledit contenant étant défini par un tube dont chacune des extrémités est prolongée par une demi-sphère et dont le diamètre est tel qu'il permet une introduction sensiblement sans jeu du bloc de réactif, lui-même de forme cylindrique et pris en sandwich entre deux disques aptes à coulisser longitudinalement, le cas échéant en direction de chaque demi-sphère sous l'effet de l'expansion du bloc de réactif, ou, le cas échéant en direction de la zone centrale du tube sous l'effet de la rétractation du bloc de réactif.

Par ailleurs, selon une caractéristique avantageuse, la présente invention prévoit également que les moyens diffuseurs, autorisant la répartition du flux gazeux dans un sens ou dans l'autre entre le bloc de réactif et le réservoir, sont définis par un ensemble de plusieurs parois imbriquées entre elles, délimitant centralement un canal, réalisées chacune à partir de matériaux aptes à permettre le passage du flux gazeux, ledit ensemble étant apte à être inséré au travers d'orifices réalisés à cet effet sur ledit bloc de réactif et lesdites parois mobiles, et ledit ensemble communiquant au niveau d'une de ses extrémités avec la tubulure reliant entre eux le contenant et le réservoir.

Selon une forme de réalisation conforme à l'invention, le réacteur thermochimique est équipé de moyens de chauffage définis par un ensemble de colliers ou rubans chauffants positionnés à l'extérieur du contenant dans lequel est disposé le bloc de réactif.

D'autre part le présent document se rapporte également à un appareil de réfrigération et/ou de chauffage comprenant un réacteur thermochimique conforme à l'invention, relié à un réservoir de fluide gazeux au moyen d'une tubulure équipée d'une vanne, ainsi qu'à un dispositif isotherme équipé d'un tel appareil de réfrigération et/ou de chauffage.

La présente invention concerne également les caractéristiques qui ressortiront au cours de la description qui va suivre, et qui devront être considérées isolément ou selon toutes leurs combinaisons possibles.

Cette description se rapportant à des exemples de réalisation, donnés à titre indicatif et non limitatif, fera mieux comprendre comment l'invention peut être réalisée, en référence aux dessins annexés, dans lesquels :
- la figure 1 représente une vue schématique, en perspective et en éclaté, d'un mode de réalisation d'un réacteur thermochimique selon la présente invention,
- la figure 2 représente une vue schématique en perspective d'un appareil de réfrigération et/ou de chauffage selon l'invention,
- les figures 3 et 4 représentent des vues schématiques en coupe longitudinale d'un réacteur thermochimique selon l'invention, respectivement avant et après l'absorption du gaz,
- la figure 5 représente une vue schématique en perspective d'un dispositif équipé de l'appareil de réfrigération et/ou de chauffage de la figure 2.

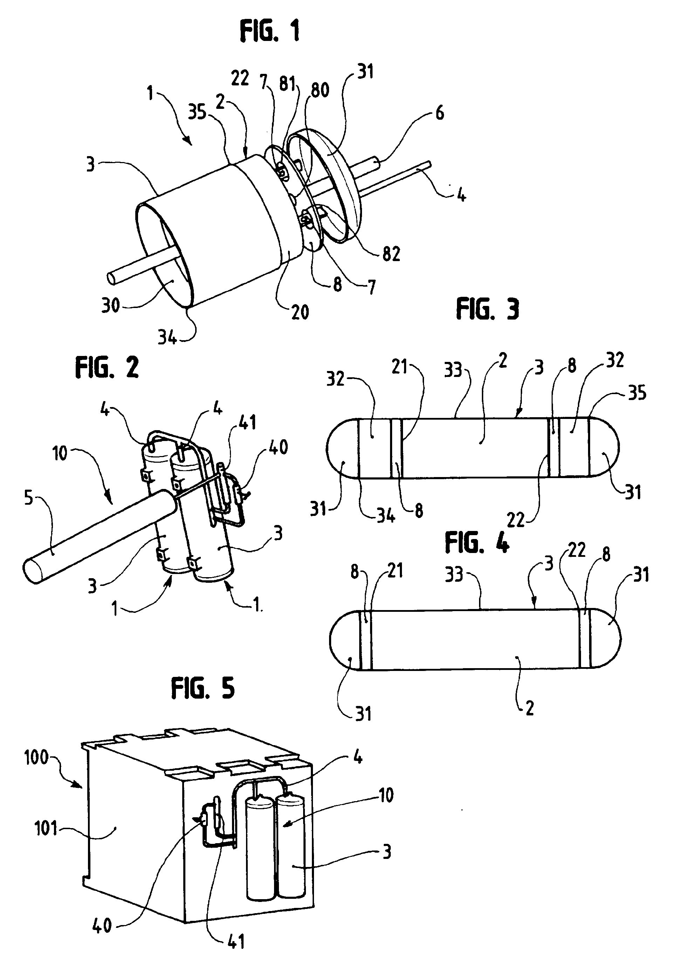

Le réacteur thermochimique 1 visible sur la figure 1, relatif à un mode de réalisation particulier de l'invention, est constitué d'un bloc solide de réactif 2, présenté sous la forme d'au moins quatre galettes cylindriques introduites dans un contenant 3 défini par un tube, lequel est réalisé de préférence en acier inoxydable et présente un diamètre adapté pour garantir un contact étroit entre ses parois internes 30 et la surface externe 20 du bloc de réactif 2 après leur assemblage. Par ailleurs, tel que visible sur la figure 3, le bloc de réactif 2 est glissé à l'intérieur du tube définissant le contenant 3 de manière centrée, en prévoyant à chaque extrémité 34, 35 dudit tube un certain débattement 32.

Chacune des extrémités 34, 35 du tube définissant le contenant 3 est par ailleurs fermée grâce à des moyens d'obturation 31 présentant la forme d'une demi-sphère ou d'une calotte (dont une seule est schématisée sur la figure 1), que l'on vient y fixer par soudure, lors de la fabrication du réacteur 1.

Le contenant 3 est relié au moyen d'une tubulure 4 munie d'une vanne 40, et d'un clapet et/ou vanne anti-retour 41, à un réservoir 5, visible sur la figure 2, destiné à contenir un gaz sous pression, par exemple de l'ammoniac.

Préférentiellement, la nature du bloc de réactif 2 employé dans un réacteur thermochimique selon l'invention est basée sur l'association de deux constituants, à savoir du Graphite Naturel Expansé (GNE) qui demeure inerte au cours de la réaction thermochimique, et un sel réactif, tels que des sels alcalins, alcalino-terreux, ou métalliques. Il a pu être mis en évidence qu'une telle structure, incluant du GNE, permettait d'améliorer les performances thermochimiques du procédé.

Dans l'exemple de réalisation représenté sur la figure 1, le bloc de réactif 2 est perforé de trois orifices, non visibles, dont un orifice central et deux orifices situés de part et d'autre de celui-ci, respectivement destinés à permettre le passage de moyens diffuseurs 7, destinés à autoriser la répartition du flux gazeux, dans un sens ou dans l'autre, entre le bloc de réactif 2 et le réservoir 5, et d'un fourreau 6 destiné à accueillir des moyens de chauffage tels qu'une résistance chauffante.

On peut noter à ce propos que selon une autre forme de réalisation, un réacteur thermochimique conforme à l'invention, pourrait également être pourvu de moyens de chauffage définis non par une résistance chauffante insérée dans le bloc de réactif 2, mais par un ensemble de colliers ou rubans chauffants positionnés à l'extérieur dudit contenant 3.

Le fourreau 6 de la résistance chauffante se présente classiquement sous la forme d'un tube en acier inoxydable qui traverse le contenant 3 de part en part, et est fixé au niveau de ses deux extrémités sur les fonds des moyens d'obturation 31 sous la forme de demi-sphères, tandis que les moyens diffuseurs 7 dont la structure, représentant une autre spécificité de la présente invention, se présente sous la forme d'un assemblage de plusieurs parois perméables.

Ainsi, ces moyens diffuseurs 7 sont plus particulièrement définis par un ensemble de plusieurs parois imbriquées entre elles, délimitant centralement un canal, réalisées chacune à partir de matériaux aptes à permettre le passage du flux gazeux, ledit ensemble étant apte à être inséré au travers des orifices précédemment évoqués, réalisés à cet effet sur ledit bloc de réactif 2. Ledit ensemble de parois communique au niveau d'une de ses extrémités avec la tubulure 4 reliant entre eux le contenant 3 et le réservoir 5 et acheminant le flux gazeux entre ces deux éléments.

En fait, l'ensemble formant les moyens diffuseurs 7 comprend notamment une paroi interne définie par un profilé de section triangulaire fabriqué après pliage en deux points d'une tôle perforée , par exemple de type R2T4, ainsi qu'une paroi médiane constituée par une toile en acier inoxydable dont la dimension des mailles est de préférence comprise entre 10 microns et 100 microns, enroulée autour de la tôle perforée. Finalement, l'ensemble comprend encore une paroi externe, définie par un tube poreux en métal étiré, dont la dimension des pores est de préférence comprise entre 100 microns et 800 microns.

D'autre part, selon l'invention, cet ensemble de plusieurs parois comprenant les moyens diffuseurs 7 présente une longueur sensiblement identique à celle du tube formant le contenant 3, de sorte que chacune de ses extrémités arrive en contact avec le fond de chacune des demi-sphères des moyens d'obturation 31.

De manière connue, le rôle des moyens diffuseurs 7 est primordial dans le déroulement et la reproductibilité dans le temps de la réaction thermochimique. La structure conférée aux moyens diffuseurs 7 dans le cadre de la présente invention présente, à cet effet, de multiples avantages. En effet, la tôle perforée empêche les orifices diffuseurs réalisés sur le bloc de réactif 2 de se boucher, tandis que la toile en acier inoxydable sert de filtre apte à retenir dans le bloc de réactif 2 d'éventuels grains de sels aspirés dans le circuit lors de l'ouverture de la vanne 40. En outre, le tube en métal étiré empêche les contraintes dues à l'expansion du bloc de réactif 2 de percer la toile en acier inoxydable à travers les trous de la tôle perforée.

Du fait d'une telle structure du réacteur thermochimique 1, la matière constituant le bloc de réactif 2 est donc confinée de manière radiale entre la paroi interne 30 du contenant 3, la paroi du fourreau 6 et la paroi externe de l'ensemble de parois comprenant les moyens diffuseurs 7.

Avantageusement, selon l'invention, le bloc de réactif 2 est par ailleurs pris en sandwich entre deux disques 8, pourvus d'orifices 80, 81, 82 pour le passage respectivement du fourreau 6 et des moyens diffuseurs 7, ces orifices 80, 81, 82 étant situés en face des orifices réalisés pour les mêmes raisons sur le bloc de réactif 2.

Selon l'invention, ces disques 8 définissent avantageusement des parois mobiles aptes à coulisser longitudinalement, et accompagner le mouvement du bloc de réactif 2, le cas échéant vers les moyens d'obturation 31, le long du débattement 32, sous l'effet d'une expansion du bloc de réactif 2 lors de la production de froid, ou vers la zone centrale 33 du contenant 3 sous l'effet d'une rétractation du bloc de réactif 2, lors de sa régénération.

Selon un mode de réalisation préférentiel, les disques 8 sont appliqués respectivement sur une des faces inférieure 21 ou supérieure 22 du bloc de réactif dont ils sont rendus solidaires au travers de moyens de solidarisation appropriés.

Classiquement, lors de l'ouverture de la vanne 40, le gaz maintenu sous pression à l'état liquide au sein du réservoir 5, s'évapore et est diffusé au travers des moyens diffuseurs 7 vers les sels du bloc réactif 2 qui le fixent, tout en étant aptes, conformément à l'invention, à s'expanser longitudinalement, tel que visible en référence aux figures 3 et 4. L'évaporation du gaz entraîne la production de froid au niveau du réservoir 5, alors que la réaction entre le gaz et les sels, exothermique, conduit simultanément à un dégagement de chaleur au niveau du contenant 3. Lorsque les sels du bloc réactif 2 sont totalement saturés, la résistance chauffante est branchée sur le secteur, pour provoquer un apport de chaleur et la désorption du gaz qui retourne, via le clapet anti-retour 41, vers le réservoir 5 où il se recondense, tandis que le bloc de réactif 2 se rétracte pour reprendre son volume intial.

Le fait de laisser respirer et s'expanser longitudinalement le bloc de réactif 2 le long des débattements 32 permet avantageusement d'éviter les problèmes de détérioration du réacteur redoutés avec les dispositifs classiques, en particulier car cela permet d'éviter les fortes contraintes de pression subies par les moyens diffuseurs 7, jouant classiquement également le rôle de parois de confinement.

D'autre part, selon une autre caractéristique de l'invention, les disques 8 présentent un diamètre sensiblement identique au diamètre interne du tube définissant le contenant 3, et sont ainsi aptes à venir chacun en butée sur la paroi interne dudit tube au niveau de chacun des moyens d'obturation 31, du fait du rétrécissement du diamètre du tube à cet endroit, pour stopper le mouvement effectué par le bloc de réactif 2 au cours de son expansion et l'empêcher d'entrer en contact avec le fond de chacune des moyens d'obturation 31.

Ainsi, la présence des disques 8 empêche avantageusement les extrémités des moyens diffuseurs 7 de se boucher lors de l'expansion du bloc de réactif 2.

L'invention concerne également un appareil de réfrigération et/ou de chauffage 10 tel que par exemple celui schématisé sur la figure 2, lequel comprend deux réacteurs thermochimiques 1 présentant les caractéristiques précédemment décrites, chacun d'entre eux étant relié à un réservoir 5 de fluide gazeux au moyen d'une tubulure 4 elle-même équipée d'une vanne 40 et d'un clapet anti-retour 41.

En référence à la figure 5, un tel appareil de réfrigération et/ou de chauffage 10 peut être adapté sur un dispositif isotherme 100, présentant un caisson 101 destiné à recevoir les produits à maintenir à température et vers l'intérieur duquel ledit réservoir 5 produisant le froid est orienté.

## Revendications

1. Réacteur thermochimique (1) pour appareil de réfrigération et/ou de chauffage (10) comprenant au moins un bloc de réactif (2) apte à absorber par combinaison chimique un flux gazeux en provenance d'un réservoir (5) et à désorber ce flux gazeux par réaction chimique inverse, sous l'effet d'une élévation de température, afin qu'il réintègre ledit réservoir (5), ledit bloc de réactif (2) étant disposé dans un contenant (3) relié audit réservoir (5) au travers d'une tubulure (4) et présentant des parois, dont certaines au moins comprennent des moyens diffuseurs (7) autorisant la répartition du flux gazeux dans un sens ou dans l'autre entre le bloc de réactif (2) et le réservoir (5), ledit bloc de réactif (2) étant du type susceptible de s'expanser lors de l'absorption du flux gazeux et de se rétracter lors de la désorption du flux gazeux et étant relié à des moyens de chauffage, certaines au moins desdites parois consistant en des parois mobiles sous forme de disques, aptes à accompagner le mouvement longitudinal effectué par le bloc de réactif (2) lors de son expansion ou de sa rétractation à l'intérieur dudit contenant (3), **caractérisé par le fait que** ledit contenant (3) se présente sous la forme d'un tube prolongé à chacune de ses extrémités par des moyens d'obturation (31) sous la forme d'au moins une demie sphère et dont le diamètre est tel qu'il permet une introduction sans jeu du bloc de réactif, lui-même de forme cylindrique et pris en sandwich entre lesdits deux disques aptes à coulisser longitudinalement, de sorte à autoriser les phénomènes successifs de déformation par expansion et de retour à la forme initiale par rétractation dudit bloc de réactif (2).

2. Réacteur (1) selon la revendication 1, **caractérisé en ce que** lesdits disques (8) présentent un diamètre sensiblement identique au diamètre interne du tube définissant le contenant (3), et sont ainsi aptes à venir chacun en butée sur la paroi interne d'un des moyens d'obturation (31), pour stopper le mouvement effectué par le bloc de réactif (2) au cours de son expansion et l'empêcher d'entrer en contact avec le fond de chacun des moyens d'obturation (31).

3. Réacteur (1) selon l'une quelconque des revendications 1 ou 2, **caractérisé en ce que** les disques (8) sont appliqués respectivement sur une des faces inférieure (21) ou supérieure (22) du bloc de réactif (2) dont ils sont rendus solidaires au travers de moyens de solidarisation appropriés.

4. Réacteur (1) selon l'une quelconque des revendications précédentes, **caractérisé en ce que** les moyens diffuseurs (7), autorisant la répartition du flux gazeux dans un sens ou dans l'autre entre le bloc de réactif (2) et le réservoir (5), sont définis par un ensemble de plusieurs parois imbriquées entre elles, délimitant centralement un canal, réalisées chacune à partir de matériaux aptes à permettre le passage du flux gazeux, ledit ensemble étant apte à être inséré au travers d'orifices réalisés à cet effet sur ledit bloc de réactif (2) et lesdites parois mobiles, et ledit ensemble communiquant au niveau d'une de ses extrémités avec la tubulure (4) reliant entre eux le contenant (3) et le réservoir (5).

5. Réacteur (1) selon la revendication 4, **caractérisé en ce que** l'ensemble est constitué d'une paroi interne définie par un profilé de section triangulaire issu du pliage approprié d'une tôle perforée, d'une paroi médiane définie par une toile en acier inoxydable enroulée autour de ladite paroi interne, et d'une paroi externe définie par un tube en métal poreux.

6. Réacteur (1) selon la revendication 5, **caractérisé en ce que** la tôle perforée est de type R2T4.

7. Réacteur (1) selon la revendication 5 ou la revendication 6, **caractérisé en ce que** la toile en acier inoxydable présente des mailles dont les dimensions sont comprises entre 10 microns et 100 microns.

8. Réacteur (1) selon la revendication 5, **caractérisé en ce que** le métal poreux présente des pores dont les dimensions sont comprises entre 100 microns et 800 microns.

9. Réacteur (1) selon l'une quelconque des revendications 4 à 8, **caractérisé en ce que** l'ensemble de plusieurs parois présente une longueur sensiblement identique à celle du tube définissant le contenant, de sorte que chacune de ses extrémités arrive en contact avec le fond de chacun des moyens d'obturation (31).

10. Réacteur (1) selon l'une quelconque des revendications précédentes, **caractérisé en ce que** les moyens de chauffage sont définis par un ensemble de colliers ou rubans chauffants positionnés à l'extérieur du contenant (3).

11. Appareil de réfrigération et/ou de chauffage (10) comprenant un réacteur thermochimique (1) selon l'une quelconque des revendications 1 à 10 relié à un réservoir (5) de fluide gazeux au moyen d'une tubulure (4) équipée d'une vanne (40).

12. Dispositif isotherme (100) équipé d'un appareil de réfrigération et/ou de chauffage (10) selon la revendication 11.

## Claims

1. Thermochemical reactor (1) for a refrigerating and/or a heating apparatus (10) including at least one reactant unit (2) capable of absorbing by chemical combination a gaseous flux coming from a reservoir (5) and of desorbing said gaseous flux by inverse chemical reaction, under the effect of a temperature increase, so that it reintegrates said reservoir (5), said reactant unit (2) being placed in a container (3) connected with said reservoir (5) by means of a pipe (4) and having walls, of which at least some include diffusing means (7) permitting the distribution of gaseous flux in one direction or in the other between the reactant unit (2) and the reservoir (5), said reactant unit (2) being of the type capable of expanding during the absorption of the gaseous flux and of retracting during the desorption of the gaseous flux and being connected to heating means, at least some of said walls consisting of movable walls in the form of disks, capable of accompanying the longitudinal movement made by the reactant unit (2) during its expansion or its retraction inside said container (3), wherein said container (3) is in the form of a tube prolonged at each of its ends by closing means (31) in the form of at least one semi-sphere and whose diameter is such that it permits an introduction without play of the reactant unit, having itself a cylindrical shape and sandwiched between said two disks capable of sliding longitudinally, so as to allow the successive phenomena of deformation by expansion and of return to the initial shape by retraction of said reactant unit (2).

2. Reactor (1) according to claim 1, wherein said disks (8) have a diameter substantially identical to the internal diameter of the tube defining the container (3), and are thus capable of coming into abutment against the internal wall of one of the closing means (31), to stop the movement made by the reactant unit (2) during its expansion and prevent it from getting into contact with the bottom of each of the closing means (31).

3. Reactor (1) according to any of the claims 1 or 2, wherein the disks (6) are applied respectively on one of the lower (21) or upper (22) sides of the reactant unit (2) with which they are made integral through appropriate means for making them integral.

4. Reactor (1) according to any of the preceding claims, wherein the diffusing means (7), permitting the distribution of the gaseous flux in one direction or in the other between the reactant unit (2) and the reservoir (5), are defined by a group of several walls imbricated into each other, delimiting centrally a channel, each made of materials capable of permitting the passing through of the gaseous flux, said group being capable of being inserted through openings provided for this purpose in said reactant unit (2) and said movable walls, and said group communicating at the level of one of its ends with the pipe (4) connecting the container (3) and the reservoir (5).

5. Reactor (1) according to claim 4, wherein the group is comprised of an internal wall defined by a profile having a triangular section obtained as a result of the appropriate folding of a perforated sheet metal, a median wall defined by a flexible sheet of stainless steel wound round said internal wall, and an external wall defined by a tube made of a porous metal.

6. Reactor (1) according to claim 5, wherein the perforated sheet metal is of the R2T4 type.

7. Reactor (1) according to claim 5 or claim 6, wherein the flexible sheet of stainless steel has meshes whose dimensions are comprised between 10 microns and 100 microns.

8. Reactor (1) according to claim 5, wherein the porous metal has pores whose dimensions are comprised between 100 microns and 800 microns.

9. Reactor (1) according to any of the claims 4 through 8, wherein the group of several walls has a length substantially identical to that of the tube defining the container, so that each of its ends gets into contact with the bottom of each of the closing means (31).

10. Reactor (1) according to any of the preceding claims, wherein the heating means are defined by a set of heating collars or strips positioned outside the container (3).

11. Refrigerating and/or a heating apparatus (10) including a thermochemical reactor (1) according to any of the claims 1 through 10 connected to a reservoir (5) of gaseous fluid by means of a pipe (4) equipped with a valve (40).

12. Isothermal device (100) equipped with a refrigerating and/or a heating apparatus (10) according to claim 11.

## Patentansprüche

1. Thermochemischer Reaktor (1) für Kühl- und/oder Heizgerät (10), umfassend wenigstens einen Reagenzblock (2), geeignet, um durch chemische Verbindung ein gasförmiges, aus einem Vorratsbehälter (5) eindringendes Flussmittel zu absorbieren und dieses gasförmige Flussmittel durch inverse chemische Reaktion unter der Wirkung von Temperaturerhöhung zu desorbieren, damit es in den besagten Vorratsbehälter (5) zurückkehrt, wobei der besagte Reagenzblock (2) in einem Behälter (3) angeordnet sei, der mit dem besagten Vorratsbehälter (5) durch einen Anschlussstutzen (4) verbunden ist und Wände aufweist, von denen zumindest einige Diffusionsmittel (7) umfassen, die die Verteilung des gasförmigen Flussmittels in der einen oder in der anderen Richtung zwischen dem Reagenzblock (2) und dem Vorratsbehälter (5) erlauben, wobei der besagte Reagenzblock (2) derartig sei, um sich bei der Absorption des gasförmigen Flussmittels zu erweitern und sich bei der Desorption des gasförmigen Flussmittels zusammenzuziehen, und mit Heizungsmitteln verbunden sei, wobei zumindest einige von den besagten Wänden aus beweglichen Wänden in Form von Scheiben bestehen, die geeignet sind, um die durch den Reagenzblock (2) bei seiner Ausdehnung oder bei seinem Zusammenziehen im Innern des besagten Behälters (3) ausgeführten Längsbewegung zu begleiten, **dadurch gekennzeichnet, dass** der besagte Behälter (3) als ein Rohr ausgestaltet ist, das an jedem von seinen Enden durch Verschliessungsmittel (31) in Form von wenigstens einer Halbkugel verlängert ist, und dessen Durchmesser so einer ist, dass er eine Einführung ohne Spiel des Reagenzblocks erlaubt, der selbst zylindrischer Form und eingeklemmt zwischen den besagten beiden Scheiben ist, die geeignet sind, um in Längsrichtung zu gleiten, derart, um die aufeinanderfolgenden Phänomene der Verformung durch Ausdehnung und der Rückkehr zur anfänglichen Form durch Zusammenziehen des besagten Reagenzblocks (2) zu erlauben.

2. Reaktor (1) nach Anspruch 1, **dadurch gekennzeichnet, dass** die besagten Scheiben (8) einen Durchmesser aufweisen, der im wesentlichen mit dem inneren Durchmesser des Rohrs identisch ist, das den Behälter (3) bildet, und so geeignet sind, jeweils an die innere Wand des einen von den Verschliessungsmitteln (31) anzuschlagen, um die durch den Reagenzblock (2) im Laufe seiner Ausdehnung ausgeführten Bewegung zu stoppen und ihn daran zu hindern, mit dem Unterteil von jedem der Verschliessungsmittel (31) in Berührung zu kommen.

3. Reaktor (1) nach irgendeinem der Ansprüche 1 oder 2, **dadurch gekennzeichnet, dass** die Scheiben (6) jeweils auf eine der unteren (21) oder oberen (22) Seiten des Reagenzblocks (2) angebracht sind, mit dem sie durch angemessene Mittel zur festen Verbindung fest verbunden sind.

4. Reaktor (1) nach irgendeinem der vorgehenden Ansprüche, **dadurch gekennzeichnet, dass** die Diffusionsmittel (7), die die Verteilung des gasförmigen Flussmittels in der einen oder in der anderen Richtung zwischen dem Reagenzblock (2) und dem Vorratsbehälter (5) erlauben, durch eine Gesamtheit von mehreren, in einander verschachtelten Wänden gebildet sind, die mittig einen Kanal abgrenzen und jeweils aus Materialien hergestellt sind, geeignet, um den Durchlauf des gasförmigen Flussmittels zu erlauben, wobei die besagte Gesamtheit geeignet sei, um durch Öffnungen, die zu diesem Zweck an dem besagten Reagenzblock (2) und den besagten beweglichen Wänden vorgesehen sind, eingefügt zu werden, und wobei die besagte Gesamtheit im Bereich des einen von ihren Enden mit dem Anschlussstutzen (4), der den Behälter (3) und den Vorratsbehälter (5) miteinander verbindet, in Verbindung steht.

5. Reaktor (1) nach Anspruch 4, **dadurch gekennzeichnet, dass** die Gesamtheit aus einer inneren Wand, gebildet durch ein Profilelement mit dreieckigem Querschnitt, herrührend von dem angemessenen Biegen eines Lochblechs, aus einer mittleren Wand, gebildet durch ein Gewebe aus nichtrostendem Stahl, aufgewickelt um die besagte innere Wand, und aus einer äußeren Wand, gebildet durch ein Rohr aus porösem Metall, besteht.

6. Reaktor (1) nach Anspruch 5, **dadurch gekennzeichnet, dass** das Lochblech vom Typ R2T4 ist.

7. Reaktor (1) nach Anspruch 5 oder Anspruch 6, **dadurch gekennzeichnet, dass** das Gewebe aus nichtrostendem Stahl Maschen aufweist, deren Abmessungen zwischen 10 Mikron und 100 Mikron liegen.

8. Reaktor (1) nach Anspruch 5, **dadurch gekennzeichnet, dass** das poröse Metall Poren aufweist, deren Abmessungen zwischen 100 Mikron und 800 Mikron liegen.

9. Reaktor (1) nach irgendeinem der Ansprüche 4 bis 8, **dadurch gekennzeichnet, dass** die Gesamtheit von mehreren Wänden eine Länge aufweist, die im wesentlichen mit jener des Rohrs identisch ist, das den Behälter bildet, derart, dass jedes von ihren Enden mit dem Unterteil von jedem der Verschliessungsmittel (31) in Berührung kommt.

10. Reaktor (1) nach irgendeinem der vorgehenden Ansprüche, **dadurch gekennzeichnet, dass** die Heizungsmittel durch eine Gesamtheit von Ringheizkörpern oder Heizbändern gebildet sind, die außerhalb des Behälters (3) angeordnet sind.

11. Kühl- und/oder Heizgerät (10), umfassend einen thermochemischen Reaktor (1) nach irgendeinem der Ansprüche 1 bis 10, der mit einem Vorratsbehälter (5) für gashaltiges Medium mit Hilfe eines Anschlussstutzens (4) verbunden ist, der mit einem Ventil (40) ausgestattet ist.

12. Isotherme Vorrichtung (100), die mit einem Kühl- und/oder Heizgerät (10) nach Anspruch 11 ausgestattet ist.
